(19) **Europäisches Patentamt / European Patent Office / Office européen des brevets**

(11) **EP 3 438 170 A1**

(12) **EUROPEAN PATENT APPLICATION**
published in accordance with Art. 153(4) EPC

(43) Date of publication:
06.02.2019 Bulletin 2019/06

(21) Application number: 17775385.2

(22) Date of filing: 30.03.2017

(51) Int Cl.:
*C08J 9/00* (2006.01)      *H01G 9/02* (2006.01)
*H01G 11/52* (2013.01)      *H01M 2/16* (2006.01)

(86) International application number:
**PCT/JP2017/013208**

(87) International publication number:
**WO 2017/170851 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 31.03.2016  JP 2016070962

(71) Applicants:
• **JNC Corporation**
  **Chiyoda-ku**
  **Tokyo 100-8105 (JP)**
• **JNC Petrochemical Corporation**
  **Tokyo 100-0004 (JP)**

(72) Inventors:
• **YAMAMOTO Yasuhiro**
  **Ichihara-shi**
  **Chiba 290-8551 (JP)**
• **HONDA Kouichi**
  **Ichihara-shi**
  **Chiba 290-8551 (JP)**
• **ENOKI Nobuo**
  **Ichihara-shi**
  **Chiba 290-8551 (JP)**

(74) Representative: **Becker Kurig Straus**
**Patentanwälte**
**Bavariastrasse 7**
**80336 München (DE)**

(54) **MICROPOROUS MEMBRANE WITH EXCELLENT LOW-TEMPERATURE CHARACTERISTICS, AND PRODUCTION PROCESS THEREFOR**

(57)    Provided is a microporous membrane which is suitable for use as a battery separator, and gives a battery having satisfactory low-temperature characteristics. The microporous membrane comprises a thermoplastic resin, and has an ion resistance of 0.20 or less, a reaction resistance of 0.45 or less, and a total resistance of 0.60 or less. Due to this, the microporous membrane is suitable for use as a battery separator and can give a battery having satisfactory low-temperature characteristics.

EP 3 438 170 A1

**Description**

**Technical Field**

The invention relates to a microporous membrane formed of a thermoplastic resin, and a method for producing the same.

**Background Art**

In a low-temperature environment, a lithium ion battery is easy to cause significant reduction or rapid deterioration of performance thereof, which is caused by a rise of viscosity of an electrolyte, reduction of reactivity in an electrode or the like, and has remained as a serious problem particularly in a battery for automotive applications or the like. Therefore, studies have been made on improvement of low-temperature characteristics in each battery manufacturer. However, the cause is attributed to the rise of viscosity of the electrolyte or the reduction of reactivity of the electrode as described above, and therefore subjects of development have been focused on improvement of the electrolyte (for example, see Patent literature No. 1) or optimization of the electrode (for example, see Patent literature No. 2), and therefore an approach has less often been made on improvement of the low-temperature characteristics from a separator.

Attempts have been made on improving the low-temperature characteristics of a microporous membrane used for the separator with focusing on the separator (for example, see Patent literature Nos. 3 and 4). All attempts have aimed at improvement of the characteristics by improving liquid retention by using a coating type separator. While the low-temperature characteristics of the separator are improved by the coating, a cost increase or a problem such as line contamination by peeling of a coating layer in a battery production line has been caused. Further, no sufficient effect is obtained only by improving the liquid retention.

**Reference List**

**Patent Literature**

Patent literature No. 1: JP 2014-056847 A.
Patent literature No. 2: JP 2014-212003 A.
Patent literature No. 3: JP 2015-191886 A.
Patent literature No. 4: JP 2015-220223 A.

**Summary of Invention**

**Technical Problem**

An object of the invention is to provide a microporous membrane that is suitable for a battery separator, and has good low-temperature characteristics of a battery.

**Solution to Problem**

The invention has structure described below.

Item 1. A microporous membrane, including a thermoplastic resin, wherein ion resistance is 0.20 or less, reaction resistance is 0.45 or less, and total resistance is 0.60 or less.
Item 2. The microporous membrane according to item 1, wherein a film thickness of the microporous membrane is 10 μm to 30 μm, and an equivalent film thickness is 25 to 70.
Item 3. The microporous membrane according to item 1 or item 2, wherein the thermoplastic resin is polypropylene.
Item 4. The microporous membrane according to any one of items 1 to 3, wherein the microporous membrane is used for a separator in an electric storage device.
Item 5. The microporous membrane according to item 4, wherein the electric storage device is a lithium ion battery.
Item 6. The microporous membrane according to item 4, wherein the electric storage device is a capacitor.
Item 7. An electric storage device, including the microporous membrane according to any one of items 1 to 3.
Item 8. A lithium ion battery, including the microporous membrane according to any one of items 1 to 3.
Item 9. A capacitor, including the microporous membrane according to any one of items 1 to 3.

**Advantageous Effects of Invention**

In a microporous membrane according to the invention, a large number of comparatively small microporous are formed, and formation of large pores in which a plurality of voids are connected with each other is suppressed. Further, an unperforated part is narrow, and therefore smooth ion transfer on an electrode interface can be presumably performed. In such a microporous membrane, both high ion permeability and high electrode reactivity can be satisfied. A battery obtained by using the microporous membrane for a separator of the battery according to the invention has good low-temperature characteristics because smooth ion movement can be made at a low temperature, and high reactivity of an electrode is maintained.

**Description of Embodiments**

A microporous membrane according to the invention is a microporous membrane formed of a thermoplastic resin, in which ion resistance is 0.20 or less, reaction resistance is 0.45 or less, and total resistance is 0.60 or less.

The microporous membrane according to the invention can be utilized as a separator for an electric storage device such as a battery and a capacitor. The separator in the battery is a partition that is immersed into an electrolyte to interpose ionic conduction between a positive electrode and a negative electrode. A form of voids in the microporous membrane that constitutes the separator of the battery has an influence on characteristics of the battery. In view of the characteristics of the battery, such a state is reputedly deemed as favorable in which a large amount of voids as many as possible are present in the microporous membrane for the separator, and an ion passes through the voids penetrating through the membrane in a short period of time as much as possible. The ion resistance is used as an indicator for evaluating such a state of the microporous membrane.

Moreover, the separator has an influence on reactivity on an interface between the separator and the electrode. An electrode part in contact with an unopen part of the separator is unable to be charged and discharged, and therefore uneven charging and discharging of the electrode is caused. Therefore, the unopen part of the separator is preferably dispersed finely and uniformly as much as possible. As an indicator of the characteristics regarding the reactivity between such a separator and the electrode, the reactivity can be evaluated by the reaction resistance.

In the battery in a low-temperature environment, viscosity of the electrolyte is increased, and therefore the ion is hard to move, and the reactivity on the electrode is further reduced, and therefore the battery in formed into a state of increased non-uniformity in which a part having high reactivity, if only little, is positively used. In order to maintain the characteristics in such a situation, each of the ion resistance and the reaction resistance is required to be low, and the total resistance obtained by adding the above resistance together is required to be reduced.

In the microporous membrane according to the invention, a film thickness is preferably 10 μm to 30 μm, and porosity is preferably 45% or more. Further, an equivalent film thickness calculated by a formula: film thickness / porosity × 100 is preferably 25 to 70, and further preferably 25 to 45.

(Raw material of microporous membrane)

As a raw material of the microporous membrane according to the invention, a thermoplastic resin such as a polyolefin-based polymer is used. Above all, a polypropylene-based polymer is preferred, and a homopolymer of propylene or a copolymer produced by copolymerizing propylene with a comonomer can be utilized. The polypropylene-based polymer to be used in the invention is preferably a polymer having comparatively high crystallinity, and having a melting point in the range of 150°C to 170°C, and further preferably a polymer having a melting point in the range of 155°C to 168°C. The comonomer is generally at least one kind selected from ethylene and α-olefin having 4 to 8 carbons. Moreover, the polymer may be a polymer produced by copolymerizing branched olefins having 4 to 8 carbons, such as 2-methylpropene, 3-methyl-1-butene and 4-methyl-1-pentene, styrenes or dienes together therewith.

A content of the comonomer may be in any range, and is preferably 5% by weight or less, and particularly preferably 2% by weight or less, based on 100 parts by weight of the polymer, being the range in which a high-crystalline polypropylene-based polymer is provided.

Moreover, a melt mass flow rate (MFR, measured under conditions in accordance with JIS K6758 (230°C, 21.18 N)) of the polypropylene-based polymer described above is preferably 0.1 g/10 min to 10 g/10 min, and further preferably 0.4 g/10 min to 5.0 g/10 min.

An additive such as a nucleating agent and a filler can be blended with the raw material of the microporous membrane according to the invention. A kind and an amount of the additive are not limited as long as porosity is not adversely affected.

(Method for producing microporous membrane)

The microporous membrane according to the invention can be produced by using the raw material described above and according to a dry process including steps 1 to 5 described below. Hereinafter, the method will be described by an example using the polypropylene-based polymer as the thermoplastic resin.

(Step 1: membrane formation step)

The step 1 is a step of forming an original film by extrusion-molding the raw material. The polypropylene-based polymer that is the raw material is fed to an extruder, and melted and kneaded at a temperature equal to or higher than a melting point thereof, and extruded from dies attached to a tip end of the extruder as a film of the propylene-based polymer. The extruder used is not limited. For example, any of a single-screw extruder, a twin-screw extruder, a tandem extruder can be used as the extruder. Any die can be used if the die to be used is used for film formation. For example, various T dies can be used as the die. A thickness and a shape of the original film are not particularly limited. A ratio (draft ratio) of the thickness of the original film to a die lip clearance is 80 or more, preferably 80 to 300, and further preferably 80 to 250. The thickness of the original film is not particularly limited, but is generally 10 $\mu$m to 100 $\mu$m, and preferably 15 $\mu$m to 50 $\mu$m.

(Step 2: heat treatment step)

The step 2 is a step of applying heat treatment to the original film obtained by finishing the step 1. Predetermined tension in a length direction is applied to the original film at a temperature lower by 5°C to 65°C, and preferably 10°C to 25°C than the melting point of the polypropylene-based polymer. The tension is preferably in magnitude in which a length of the original film becomes over 1.0 time and 1.1 times or less.

(Step 3: cold stretching step)

The step 3 is a step of stretching the original film obtained by finishing the step 2, at a comparatively low temperature. A stretching temperature is -5°C to 45°C, and preferably 5°C to 30°C. A stretching ratio is 1.0 to 1.10, preferably 1.00 to 1.08, and further preferably 1.02 to 1.05 in the length direction. However, the stretching ratio is larger than 1.0. A stretching means is not limited. A publicly-known means such as a roll stretching method and a tenter stretching method can be used. The number of steps of stretching can be arbitrarily set. The film may be stretched in one step or two or more steps through a plurality of rolls. Molecules of the polypropylene-based polymer constituting the original film are oriented in the cold stretching step. As a result, a stretched film having a lamella portion in which a molecular chain is dense and a region (craze) in which the molecular chain between the lamellas is sparse can be obtained.

(Step 4: hot stretching step)

The step 4 is a step of stretching the stretched film obtained by finishing the step 3, at a comparatively high temperature. A stretching temperature is a temperature lower by 15°C to 65°C, and preferably 15°C to 45°C than the melting point of the polypropylene-based polymer. A stretching ratio is 1.5 to 4.5, preferably 2.0 to 4.0, and further preferably 2.8 to 3.5 in the length direction. A stretching means is not limited. A publicly-known means such as a roll stretching method and a tenter stretching method can be used. The number of steps of stretching can be arbitrarily set. The film may be stretched in one step or two or more steps through a plurality of rolls. The craze formed in the step 3 in the cold stretching step is stretched and voids are formed.

(Step 5: relaxing step)

The step 5 is a step of relaxing the film after the hot stretching as obtained by finishing the step 4 in order to prevent shrinkage of the film. A relaxing temperature is a temperature slightly higher, generally 0°C to 20°C higher than a temperature of hot stretching. A degree of relaxation is adjusted to be finally 0.7 to 1.0 time in the length of the stretched film obtained by finishing the step 4.

Further, as post-treatment, widening treatment, surface hydrophilizing treatment and coating of a surface using an inorganic material or the like for providing the film with heat resistance can be applied to the film obtained by finishing the step 5. As the widening treatment, the length of the film in a transverse direction (TD) and the length of the film in a machine direction (MD) are controlled by conveying the film at a suitable velocity in the machine direction of the film using a roll or the like, while supporting both end portions of the film in the transverse direction (TD) obtained by finishing the step 5 using a device such as a clamp, and applying suitable tensile force in the transverse direction of the film.

Such an extension ratio of the film in the transverse direction (TD) is more than 1.0 time, preferably 1.1 times to 2.0 times, and further preferably 1.5 times to 2.0 times.

A temperature range in which the widening treatment is applied is not particularly limited as long as the temperature is lower than the melting point of the film extended in the transverse (TD), and preferably a temperature comparable to the temperature range in the step 4 (hot stretching) described above, and more specifically, the temperature range is 15°C to 65°C lower than the melting point of the polypropylene-based polymer constituting the film described above, and preferably 15°C to 45°C lower than the melting point of the polypropylene-based polymer.

In such widening treatment, a ladder-shaped polypropylene-based polymer formed at the end of the step 5, in which a large number of voids are formed substantially orthogonal to each other, is stretched substantially only in the transverse direction (TD) of the film to form a network structure having a substantially uniform thickness. As a result, a large number of elliptical to circular voids having a larger opening width are formed in the film.

As the surface hydrophilizing treatment, the polymer can be treated by arbitrarily selecting a method from conventionally known methods such as corona treatment and plasma treatment.

In the invention, the melting point of the raw material, the film thickness of the microporous membrane, and porosity are measured under conditions described below.

(Melting point)

DSC 822 made by Mettler-Toledo international Inc. is used, and a sample is set according to an instruction manual of the apparatus. Then, a temperature of a peak top in an endothermic peak is taken as the melting point, in which the endothermic peak is caused in association with melting of the sample when temperature is raised from 10°C to 230°C at a rate of 20°C/min.

(Porosity)

The porosity is expressed in terms of a value calculated according to the calculation formula described below on a microporous membrane cut piece having a width of

```
50 mm × a length of 120 mm.
        Porosity (%) = {1 - (cut piece weight) / (cut piece
area × resin density × cut piece thickness)} × 100
```

(Film thickness)

A microporous membrane is cut out into a circle shape having a diameter of 72 mm, and a thickness of the sample is measured on arbitrarily 15 places by using a dial gauge (gauge head diameter: 5 mm, measuring load: 1.5 N) in accordance with an A-2 method of JIS K 7130 (1992). A mean value of the measured values in 15 places is taken as the film thickness.

According to the method for producing the microporous membrane of the invention, a microporous membrane having a porosity of 45% or more, and a film thickness of 10 $\mu$m to 30 $\mu$m is obtained. Typically, the porosity is in the range of 45% to 65%, and the film thickness is in the range of 15 $\mu$m to 25 $\mu$m.

**Examples**

An example of a production method according to the invention will be described below. A commercial product described below was used as a polypropylene-based polymer being a raw material.

Polypropylene-based resin 1: "Novatec (registered trademark) EA9FTD" (melting point: 165°C, MFR: 0.5) as a commercial product made by Japan Polypropylene Corporation.

Polypropylene-based resin 2: "Novatec (registered trademark) EA9HD" (melting point: 165°C, MFR: 0.5) as a commercial product made by Japan Polypropylene Corporation.

Polypropylene-based resin 3: "Novatec (registered trademark) FY6H" (melting point: 165°C, MRF: 2) as a commercial product made by Japan Polypropylene Corporation.

Polypropylene-based resin 4: "Novatec (registered trademark) EA7AD" (melting point: 158°C, MFR: 1.5) as a commercial product made by Japan Polypropylene Corporation.

Polypropylene-based resin 5: "VS200A" (melting point: 162°C, MFR: 0.5) as a commercial product made by SunAllomer Ltd.

In Examples and Comparative Example described below, a microporous membrane obtained was evaluated by a method described below.

(Preparation of evaluation cell)

A positive electrode was prepared using $LiNi_{1/3}Mn_{1/3}Co_{1/3}O_2$ as a positive electrode active material. A negative electrode was prepared using coating-type natural graphite as a negative electrode active material. The positive electrode and the negative electrode were each punched into a piece having a size of 30 mm $\times$ 50 mm, and sufficiently dried, and then faced with each other through a separator, and the resulting material was inserted into an Al laminate, and an electrolyte of 1 M $LiPF_6$/3EC/7MEC was injected thereinto, and the electrolyte was impregnated thereinto in vacuum, and the resulting material was sealed in vacuum to prepare an evaluation cell.

(Ion resistance)

An evaluation cell was charged and discharged between 4.2 V and 2.7 V at 0.2 CA in 3 cycles, and charged again to 4.2 V. AC impedance was measured at a frequency of 50 KHz, an amplitude of 10 mV and a temperature of 25°C, and a value obtained was taken as ion resistance.

(Reaction resistance)

AC impedance was measured at a frequency of 50 KHz to 0.1 Hz, an amplitude of 10 mV and a temperature of 25°C by using the cell used for measuring the ion resistance, and a diameter of a half-circle obtained by the measurement was taken as reaction resistance.

(Limiting load characteristics)

An evaluation cell was charged and discharged between 4.2 V and 2.7 V at 0.5 CA at 0°C in 10 cycles, and a ratio of discharge capacity at a 10th cycle to discharge capacity at a 1st cycle was determined, and the ratio obtained was taken as limiting load characteristics.

**Example 1**

(Raw material) Propylene polymer 1 was used. (Step 1) The raw material melted and kneaded by a single screw extruder was extruded from a T-die at a draft ratio of 159 to produce a 22 $\mu$m-thick original film. (Step 2) Then, the original film was heat-treated at 150°C. (Step 3) The original film was cold-stretched at 30°C to 1.03 times in the length direction. (Step 4) The stretched film obtained was hot-stretched at 145°C to 2.9 times in the length direction. (Step 5) The stretched film obtained was relaxed at 150°C to be 0.87 times in a length of the stretched film. Further, widening treatment in 1.1 times was applied thereto in a transverse direction as post-treatment. Thus, a microporous membrane having a final thickness of 19.4 $\mu$m according to the invention was obtained. Ion resistance, reaction resistance and limiting load characteristics of the microporous membrane obtained were measured by the methods described above, and the results are shown in Table 1.

**Comparative Example 1**

Ion resistance, reaction resistance, and limiting load characteristics were evaluated by using a commercially available separator (Celgard (registered trademark) 2320) made by Celgard, LLC. The results are shown in Table 1.

**Example 2**

(Raw material) Propylene polymer 2 was used, which was taken as Example 2. As production of a microporous membrane, the microporous membrane was produced according to the same steps as in Example 1 except that a stretched film obtained was relaxed at 150°C to be 0.87 times in a length thereof in (step 5) in Example 1, and then a microporous membrane having a final thickness of 15.0 $\mu$m was produced without applying post-treatment thereto. Ion resistance, reaction resistance and limiting load characteristics of the microporous membrane obtained were measured by the methods described above, and the results are shown in Table 1.

**Example 3**

(Raw material) Propylene polymer 3 was used, which was taken as Example 3. As production of a microporous membrane, the microporous membrane was produced according to the same steps as in Example 1 except that a stretched film obtained was relaxed at 150°C to be 0.87 times in a length thereof in (step 5) in Example 1, and then a microporous membrane having a final thickness of 20.0 $\mu$m was produced without applying post-treatment thereto. Ion resistance, reaction resistance and limiting load characteristics of the microporous membrane obtained were measured by the methods described above, and the results are shown in Table 1.

**Example 4**

(Raw material) Propylene polymer 4 was used, which was taken as Example 4. As production of a microporous membrane, the microporous membrane was produced according to the same steps as in Example 1 except that a stretched film obtained was relaxed at 150°C to be 0.87 times in a length thereof in (step 5) in Example 1, and then a microporous membrane having a final thickness of 17.0 $\mu$m was produced by applying coating treatment thereto by using an inorganic material as post-treatment. As the coating treatment, an inorganic heat-resistant layer agent that was composed of alumina (AEROXIDE AluC, average particle size: 0.1 $\mu$m), PVDF (Kyner HSV 500, made by Arkema S.A.) and N-methylpyrrolidone (NMP), and had a solid content concentration of 12% by weight, in which alumina and PVDF were uniformly dispersed, was coated onto one surface of a substrate film by using a gravure coater, and the substrate film with the heat-resistant layer agent was conveyed in a drying oven at a temperature of 95°C to dry and solidify the heat-resistant layer agent.

Ion resistance, reaction resistance and limiting load characteristics of the microporous membrane obtained were measured by the methods described above, and the results are shown in Table 1.

**Example 5**

(Raw material) Propylene polymer 5 was used, which was taken as Example 5. As production of a microporous membrane, the microporous membrane was produced according to the same steps as in Example 1 except that a stretched film obtained was relaxed at 150°C to be 0.87 times in a length thereof in (step 5) in Example 1, and then a microporous membrane having a final thickness of 20.5 $\mu$m was produced without applying post-treatment thereto. Ion resistance, reaction resistance and limiting load characteristics of the microporous membrane obtained were measured by the methods described above, and the results are shown in Table 1.

**Table 1**

|  | Example 1 | Comparative Example 1 | Example 2 | Example 3 | Example 4 | Example 5 |
|---|---|---|---|---|---|---|
| Film thickness | 19.4 | 20.0 | 15.0 | 20.0 | 17.0 | 20.5 |
| Porosity | 65.1 | 40.0 | 48.0 | 50.0 | 50.0 | 49.9 |
| Equivalent thickness | 29.8 | 50.0 | 31.3 | 40.0 | 34.0 | 41.1 |
| Ion resistance | 0.08 | 0.22 | 0.11 | 0.13 | 0.12 | 0.13 |
| Reaction resistance | 0.41 | 0.40 | 0.38 | 0.36 | 0.38 | 0.35 |
| Ion resistance + reaction resistance | 0.49 | 0.62 | 0.49 | 0.49 | 0.50 | 0.48 |
| Limiting load characteristics 0°C 0.5 CA 10 cy/1 cy | 0.99 | 0.83 | 0.93 | 0.95 | 0.94 | 0.96 |

The microporous membrane of the invention exhibited significant advantages over the commercially available separator in low-temperature characteristics.

**Industrial Applicability**

A microporous membrane of the invention can be utilized as a separator for an electric storage device such as a battery and a capacitor.

**Claims**

1.  A microporous membrane, comprising a thermoplastic resin, wherein ion resistance is 0.20 or less, reaction resistance is 0.45 or less, and total resistance is 0.60 or less.

2.  The microporous membrane according to claim 1, wherein a film thickness of the microporous membrane is 10 $\mu$m to 30 $\mu$m, and an equivalent film thickness is 25 to 70.

3.  The microporous membrane according to claim 1 or 2, wherein the thermoplastic resin is polypropylene.

4.  The microporous membrane according to any one of claims 1 to 3, wherein the microporous membrane is used for a separator in an electric storage device.

5.  The microporous membrane according to claim 4, wherein the electric storage device is a lithium ion battery.

6.  The microporous membrane according to claim 4, wherein the electric storage device is a capacitor.

7.  An electric storage device, comprising the microporous membrane according to any one of claims 1 to 3.

8.  A lithium ion battery, comprising the microporous membrane according to any one of claims 1 to 3.

9.  A capacitor, comprising the microporous membrane according to any one of claims 1 to 3.

## INTERNATIONAL SEARCH REPORT

International application No.

PCT/JP2017/013208

### A. CLASSIFICATION OF SUBJECT MATTER

*C08J9/00*(2006.01)i, *H01G9/02*(2006.01)i, *H01G11/52*(2013.01)i, *H01M2/16* (2006.01)i

According to International Patent Classification (IPC) or to both national classification and IPC

### B. FIELDS SEARCHED

Minimum documentation searched (classification system followed by classification symbols)
C08J9/00, H01G9/02, H01G11/52, H01M2/16

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-199545 A (Asahi Kasei E-materials Corp.), 03 October 2013 (03.10.2013), claims; paragraphs [0002], [0013], [0015] to [0030], [0035]; examples (Family: none) | 1-9 |
| X | JP 2014-70092 A (Asahi Kasei E-materials Corp.), 21 April 2014 (21.04.2014), claims; paragraphs [0002], [0015] to [0033]; examples (Family: none) | 1-9 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 June 2017 (15.06.17) | 27 June 2017 (27.06.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2017/013208 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,X | JP 2016-128534 A (JNC Corp.),<br>14 July 2016 (14.07.2016),<br>claims; examples<br>(Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014056847 A
- JP 2014212003 A
- JP 2015191886 A
- JP 2015220223 A